Europäisches Patentamt

European Patent Office

Office européen des brevets

(19)

(11) Publication number: **0 090 482**
**A1**

(12) ## EUROPEAN PATENT APPLICATION

(21) Application number: 83300389.0

(22) Date of filing: 26.01.83

(51) Int. Cl.³: **G 01 V 3/02, G 01 N 27/82**

(30) Priority: 17.03.82 GB 8207799

(43) Date of publication of application: 05.10.83
Bulletin 83/40

(84) Designated Contracting States: BE DE FR IT NL SE

(71) Applicant: British Gas Corporation, Rivermill
House 152 Grosvenor Road, London SW1V 3JL (GB)

(72) Inventor: Toomer, Raymond, 51 Dunholme Road,
Fenham Newcastle-upon-Tyne (GB)

(74) Representative: Wallace, Walter, British Gas
Corporation Patents Department 326 High Holborn,
London, WC1V 7PT (GB)

(54) Apparatus for measuring defects in insulation coatings.

(57) Apparatus for measuring defects in insulative coatings, eg insulating coatings applied to buried pipes comprises an AC signal generator and pairs of receiver transducers responsive to the magnetic flux associated with the generated AC signal and signal processing means for comparing the magnetic field strengths at the location of each transducer. A current gradient is obtained by comparing the field strength differences at two different points by utilizing two pairs of transducers whose axes are aligned tangentially coincident with the magnetic field. A guidance system is also provided using a pair of transducers whose axes are radially aligned with respect to the pipe.

This invention relates to electrical detectors and more particularly to the detection of defects in electrically insulating materials.

Steel pipes which are used to carry fluids such as natural gas are subject to corrosion, especially if they are buried. A thin, electrically insulating, coating is normally applied to the outer surface of steel pipes as a first defence against corrosion. Buried steel pipelines, used for bulk transport of natural gas, are usually coated along their entire length with insulating materials such as coal tar enamel, polyethylene, or epoxy resins to name but a few. The second defence against corrosion is the application of cathodic protection (CP) to the pipeline. Provided the pipe can be maintained at a suitable negative potential corrosion is inhibited. However, if a pipeline contains a section where the outer coating is damaged, or missing, a greater current is required from the CP system to maintain a suitably protective pipe potential. Hence a good, continuous, coating allows economic protection against corrosion. Even when the current demand on a CP system is not great, indicating the coating to be generally in good condition, the pipe potential at a defect may be locally very low and hence the risk of corrosion increased. It is thus advantageous to be able to accurately locate, and determine the size of, any coating defects present on a particular pipeline as an aid to condition monitoring and safety.

The equipment in current use for detecting coating defects was designed by J.M. Pearson and first described in 'Electrical Examination of Coatings on Buried Pipelines', The Petroleum Engineer, 1941, Midyear pages 82 to 89. This method has several disadvantages, namely:- the area to be surveyed must be electrically conducting, it is not possible to determine the size of a defect without excavation, and it is very clumsy in operation. In order to make surveys both quantitative and easy to perform a new approach has been adopted.

Detection of a coating defect is based upon the principle that when an alternating current flows along a buried, coated pipeline, it will be gradually lost, through the coating to earth. This is due to the finite capacitive impedance of the coating between the pipe and earth. The electrical resistance across a sound coating is very large and normally orders of magnitude larger than the capacitive impedance (for frequencies > 100Hz). Where a defect or holiday exists the resistance to ground is normally substantially lower than the impedance through the sound coating. In general the resistance from the pipe to ground at a defect will amongst other things, be dependent on the surface area of bare metal.

0090482

Recent developments in signal current monitoring include a proposal described in UK Patent Application Publication No. 2070783A which inter alia comprises three transducers which are mounted in a parallel spaced apart, arrangement, the axis of the transducers being normal to the pipe being surveyed, and wherein the distance from the third transducer to the pipe is greater than that of the second, which itself is greater than the distance of the first transducer to the pipe. Each of the transducers is responsive to the magnetic flux generated by an alternating current applied to the pipe. Processing of the signals received by the transducers may be by arranging a first processing signal, representative of a difference between the voltages from the third and second transducers and a second process signal, representative of the voltage difference from second and first transducers. The changes in magnetic flux along the pipeline will give an indication of the insulating properties of the coating.

The present invention proposes a new system which consists of an alternating current generator which injects a signal current into the pipe, and a portable receiver which inductively monitors the signal current flowing in the pipeline. As the operator carries the receiver along the pipeline the local value of signal current is computed almost instantaneously. Automatic signal processing within the receiver decides whether or not a defect is present and gives a warning to the operator accordingly. The defect decision is made by evaluating the value of local pipe current gradient, and comparing this with a threshold value. The local current gradient value allows the defect size to be estimated. Because the pipe current is measured inductively the system may be used when the pipe is buried beneath an insulating medium, eg tarmacadam, concrete, etc. All signal acquisition and signal processing is performed dynamically so the receiver may be used either stationary, or on the move. The main mode of operation of the receiver would be with the operator walking along the pipeline, the receiver making measurements on the move. A guidance system which allows the operator to follow the pipeline may also be provided.

In accordance with the present invention there is provided apparatus for detecting defects in electrically insulating coatings which apparatus includes means for generating and supplying an alternating signal current to a coated conductor and means for detecting and measuring the alternating magnetic field associated with said signal current, to infer the magnitude of the signal current characterised in that said detecting and measuring means comprises a pair of identical transducers arranged in a spaced-apart parallel relationship in a plane normal to the conductor axis and associated means for receiving, comparing and processing signals induced from each transducer in respose to magnetic flux to infer the magnitude of the said signal current.

The transducers used in the present invention may be coils which are responsive to magnetic flux, and they are used to determine current at a location along the conductor in the following manner.

If an alternating signal current flows in a buried pipe an associated alternating magnetic field, which is normally concentric with the pipe will be present. The magnetic field strength H at a radial distance r from the centre of the pipe axis is given by

$$H = \frac{I}{2\pi r} \quad Am^{-1} \qquad (1)$$

where I is the current flowing in the pipe. If two measurements of magnetic field stength, $H_1$ and $H_2$, are taken at radial distances $r_1$ and $r_2$ then the current flowing in the pipe may be calculated from

$$I = \frac{2\pi a H_1 H_2}{H_1 - H_2} \quad A \qquad (2)$$

where $a = r_2 - r_1$. It should be noted that so long as the value a is known, the calculation is independent of pipe depth. Hence by inducing an emf into two radially separate pickup coils, since emf $\propto$ H, the current flowing in the pipe may be calculated.

If the pipe current is measured at two different positions along the pipe axis, giving $I_1$ and $I_2$, a distance

d apart, the current gradient Ig may be calculated using

$$Ig = \frac{I_1 - I_2}{d} \qquad Am^{-1} \qquad (3)$$

Thus in order to measure the current gradient dynamically four pickup coils are required.

Using two radially separate pickup coils 1 the pipe depth r may be calculated from

$$r = \frac{aH_2}{H_1 - H_2} \qquad m \qquad (4)$$

where r is the distance from the lower coil to the pipe axis.

The invention will be described in greater detail with reference to the accomapanying drawings in which
Figure 1 is a schematic representation of signal current generation and application means,

Figure 2 is a schematic representation of the receiver coil geometry in respect of the determination of current gradient,

Figures 3 and 4 are block diagrams for a signal current generator and the induced signal processor and,

Figure 5 is a schematic representation of the coil geometry for the conductor locator/guidance system.

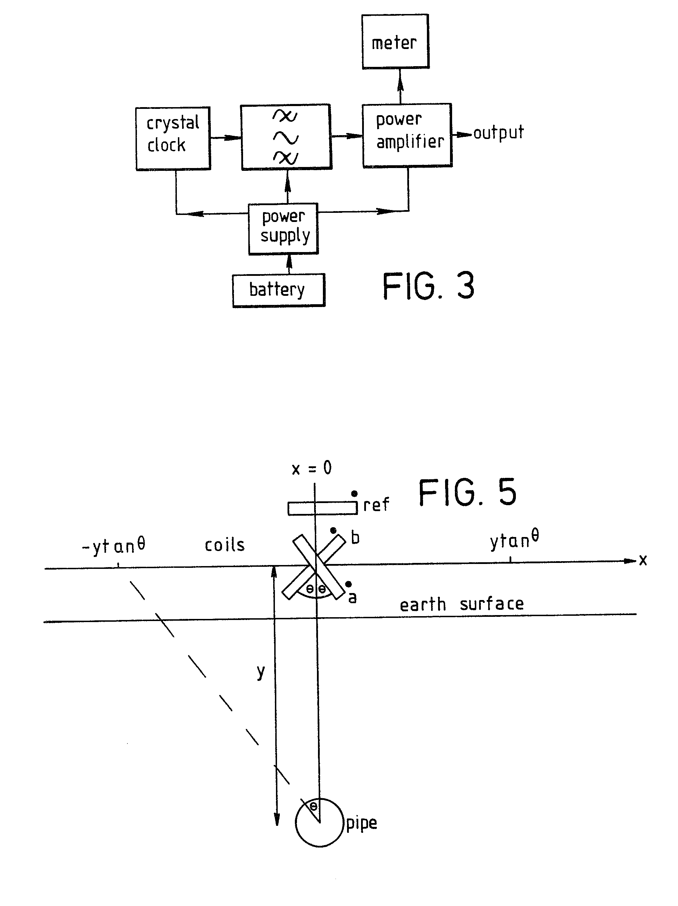

The two most critical factors of the generator design are:(a) the frequency of the signal current must not drift with time or changes in temperture, and (b), the amplitude of the output current must be stable.  A schematic diagram of the generator is shown in Fig. 3.  The square wave from a crystal derived clock is bandpass filtered to yield to sine wave at the chosen frequency (less than 1KHz).  The signal is then amplified using dc coupled circuitry.  The voltage appearing at the output terminals is amplitude controlled using feedback techniques and may be set by the operator up to a maximum of $\pm$ 50V.  The generator is powered by a 12V automobile battery and switching regulator type power supplies have been used for the circuits.  The output current is displayed on a meter and is dependent on the generator output voltage and the impedane of the pipe/earth return circuit (normally 50 to 150 ohms).

The receiver may be conveniently described in two parts, the first being the signal processing system, and the second, the guidance system.

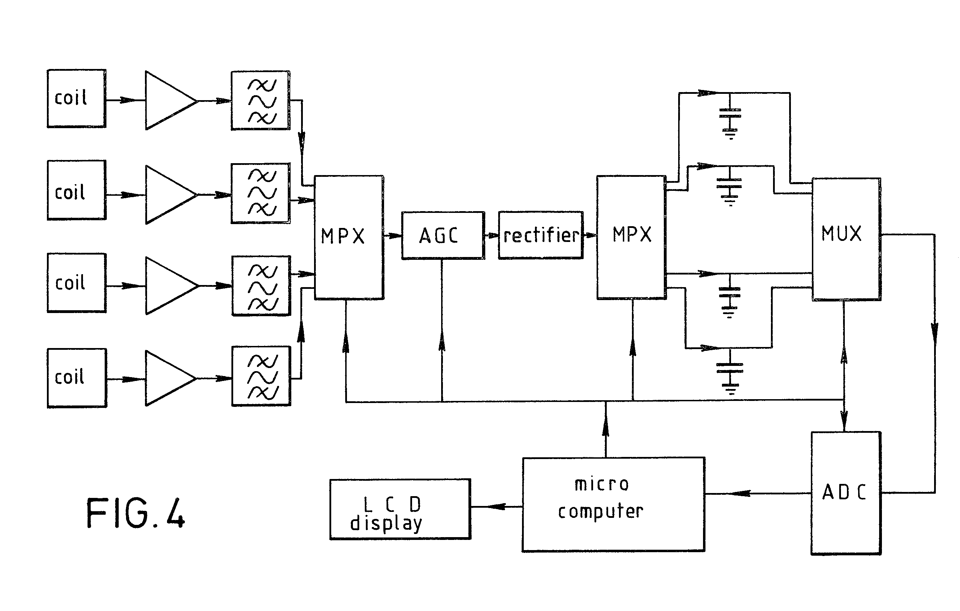

Fig. 4 shows a schematic representation of the signal processing section of the reeiver.  The alternating signals induced in the four coils are each amplified and bandpass filtered before being mutliplexed.  The common multiplexed signal has automatic gain applied before being rectified then demultiplexed. The demultiplexed signals are then
held as steady voltages across capacitors. The voltage
across each of the four capacitors are proportional to the
amplitudes of the input signals. These four voltages are
then multiplexed once again and the signal fed to the input
of a 12 bit A/D converter. A microprocessor inputs the
four digital signals and stores them in memory. The PROM
resident programme is able to perform any one of several
different calculations (outlined previously), send a value
to the liquid crystal display (LCD), and send a defect
warning to the operator. The microprocessor is also used
to control the analogue circuits. It clocks the
multiplexers at the correct time and applies the right
amount of gain (AGC) to the analogue signals to obtain
greatest accuracy. The resident programme also allows
instrument self-checking, checking of signal levels,
battery condition monitoring etc. Should any fault occur a
particular code is displayed on the LCD.

When a pickup coil, whose axis is vertical, is
traversed from one side of a current carrying pipe to the
other, the phase of the induced emf changes by $\pi$ radians.
Hence if two coils (a) and (b) are mounted as in Fig. 5, as
they travel normal to the pipe axis the phase of their
outputs will change at certain positions. If the phase of
a horizontal coil (whose phase does not change with normal
position) is taken as reference a truth table for different positions may be constructed as follows:

| Position X | Phase ref | a | b |
|---|---|---|---|
| $-y\tan\theta < x < y\tan\theta$ | 0 | 0 | 0 |
| $x < -y\tan\theta$ | 0 | $\pi$ | 0 |
| $x > y\tan\theta$ | 0 | 0 | $\pi$ |

A phase comparison circuit allows a digital truth table to be generated. Acting on the truth tabel an output circuit sends relevant signals to the operators headphones.

Let the distance between the guidance coils and the pipe axis be y and the angle of the guidance coils to be vertical $\theta$ (Fig. 5). If x is the horizontal distance of the coils from the pipe axis, then within the region $-y\tan\theta < x < y\tan\theta$ the phases of all three coils are the same. This is referred to as the quiet band and no output is sent to the operator. The width of this quiet band is dependent on the distance y which will alter for different pipe depths. However, the distance the operator may deviate from the pipe axis to keep the current calculation within the required accuracy is also dependent on pipe depth. When $x < -y\tan\theta$ or $x > y\tan\theta$ a unique output is sent to the operator to inform him of his position. In order to maintain the required accuracy of calculation the operator should stay within the quiet band.

0090482

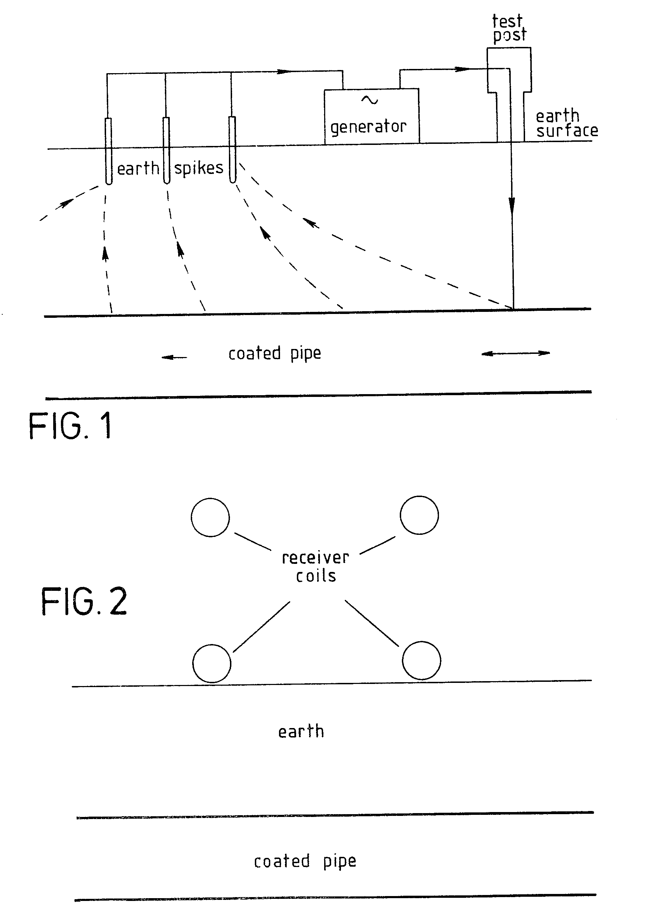

The sytem operation is as follows. A signal generator drives an alternating current into the pipe as shown in Fig. 1. The current return path via the earth and suitable earth spikes. Both the frequency and the amplitude of the signal current in the present design are held stable. Once current is flowing in the pipe a concentic magnetic field (equation 1) will be present around the pipe.

A receiver, which has four specially separate coils (Fig. 2) is carried along the pipeline axis by an operator. The receiver uses the output emf from various combinations of the coils to automatically calculate local values of pipe current, pipe current gradient, and pipe depth. The operator may select which of these values are displayed on a display panel. The receiver is able to make measurements even when the pipe is buried beneath tarmacadam or concrete.

A defect may be characterised by a local decrease in pipe current, or a locally high value of current gradient. When the current gradient option is selected by the operator, a defect warning is outputed to the operator when the calculated current gradient is greater than a predetermined threshold level. The value of current gradient displayed on the display panel gives an indication of the defect size. Where long defect areas (> several metres) are encountered a discrete current mapping (making current measurements a short distance intervals along the length of the defect) is sometimes more useful. This mapping would allow a graph of pipe current versus distance to be plotted over the defect indicating the precise areas of highest current loss, and also the total amount of current lost at the defect. Alternatively a current gradient mapping may be made allowing a graph of current gradient versus distance to be plotted. In this case the area under the curve indicates the amount of current lost from the pipe at the defect.

The measurements outlined above may be made with sufficient accuracy only if the receiver is kept on, or near, the pipe axis. To make this possible a guidance system is incorporated in the receiver. The operator receives audio signals in his headphones to inform him that he is to the left/right of the pipe. The left and right signals are different so that he knows which way to move to correct his position. When the receiver is directly over the pipe, or near enough for accurate measurement, no signals is sent to the headphones.

CLAIMS

1.    Apparatus for detecting defects in electrically insulating coatings which apparatus includes means for generating and supplying an alternating signal current to a coated conductor and means for detecting and measuring the alternating magnetic field associated with said signal current, to infer the magnitude of the signal current characterised in that said detecting and measuring means comprises a pair of identical transducers arranged in a spaced-apart parallel relationship in a plane normal to the conductor axis and associated means for receiving, comparing and processing signals induced from each transducer in response to magnetic flux to infer the magnitude of the said signal current.

2.    Apparatus as claimed in Claim 1 wherein said transducers are coils.

3.    Apparatus as claimed in Claim 1 or Claim 2 characterised in that said detecting and measuring means comprises a further pair of transducers whose axes are in a plane normal to the conductor axis and longitudinally displaced from the plane of the first pair and said associated means is arranged to compare the signals induced from each pair of transducers to infer the signal current gradient within the conductor.

4.    Apparatus as claimed in any one of Claims 1 to 3 wherein said alternating signal current is of a diferent frequency to the frequency of any electrical current flowing along the conductor.

5.    Apparatus for the location of remote electrical conductors including means for generating and supplying an alternating current signal to a conductor and means for detecting the alternating magnetic field associated with said signal current, characterised in that said detecting means comprises a first transducer whose axis is substantially horizontal, second and third transducers whose axes are angularly disposed both to the horizontal and to the vertical, and associated signal processing means for receiving and comparing signals induced in each transducers in reponse to magnetic flux.

6.    Apparatus as claimed in Claim 5 wherein said transducers are coils.

7.    Apparatus for location and detection of insulation defects in electrical conductors comprising detection apparatus as defined in any one of Claims 1 to 4 in combination with location apparatus as defined in either Claim 5 or Claim 6.

FIG. 1

FIG. 2

FIG. 3

FIG. 5

FIG. 4

## European Patent Office

## EUROPEAN SEARCH REPORT

Application number

EP 83 30 0389

### DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | GB-A-1 577 742 (ELECTROLOCATION LTD.) <br> * Figure 1; claims 1-10; page 2, lines 16-63 * | 1-7 | G 01 V 3/02 <br> G 01 N 27/82 |
| Y | US-A-3 745 452 (J.U. OSBURN et al.) <br> * Claims 1-7 * | 1-7 | |
| Y,A | GB-A-2 070 783 (M.I. HOWELL) <br> * Claims 1-12 * | 1-7 | |
| Y,A | THE PETROLEUM ENGINEER, 1941 J.M. PEARSON "Electrical examination of coatings on buried pipe lines", pages 82, 84, 86, 88, 89 <br> * Pages 82-88 * | 1,2 | |
| | | | **TECHNICAL FIELDS SEARCHED (Int. Cl. 3)** |
| | | | G 01 N 27/00 <br> G 01 V 3/00 |

The present search report has been drawn up for all claims

| Place of search <br> BERLIN | Date of completion of the search <br> 20-06-1983 | Examiner <br> DIETRICH A. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82